# EUROPÄISCHE PATENTANMELDUNG

(11) **EP 1 243 912 A1**
(43) Veröffentlichungstag der Anmeldung: **25.09.2002**
(21) Anmeldenummer: 01107131.3
(22) Anmeldetag: 22.03.2001
(51) Int. Cl.: G01N 1/31, G01N 1/36, G01N 1/42, G01N 1/44

(54) **Heiz- und Kühleinrichtung für eine Vorrichtung zur Gewebepräparation**

(71) Anmelder: Leica Mikrosysteme GmbH, 1170 Wien (AT)
(72) Erfinder: Lihl, Reinhard, Dr., 1120 Wien (AT); Zimmermann, Michael, 2333 Leopoldsdorf (AT); Bock, Günther, 1230 Wien (AT); Lamswood, Ian, 1140 Wien (AT)
(74) Vertreter: Reichert, Werner F., Dr.

(57) **Zusammenfassung**

Heiz-und Kühleinrichtung (3) für eine Vorrichtung (1) zur Gewebepräparation für die Gewebeeinbettung. Die Vorrichtung (1) besitzt eine Aussparung (13) zur Aufnahme eines Transportellers. Die Vorrichtung (1) ist von einem Gehäuse (5) umgeben, das eine Oberseite (8) definiert und die Heiz- und Kühleinrichtung (3) ist auf der Oberseite (8) des Gehäuses (5) vorgesehen, wobei die Heiz- und Kühleinrichtung (3) mindestens eine Kammer (32) für die Aufnahme der Behandlungsbehälter ausgeformt hat. Die Heiz- und Kühleinrichtung (3) ist schwenkbar mit der Oberseite des Gehäuses verbunden.

## Beschreibung

Die Erfindung betrifft eine Heiz- und Kühleinrichtung für eine Vorrichtung zur Gewebepräparation für die Gewebeeinbettung. Im besonderen betrifft die Erfindung eine Heiz- und Kühleinrichtung für eine Vorrichtung zur Gewebepräparation für die Gewebeeinbettung, wobei die Vorrichtung eine Aussparung zur Aufnahme eines Transporttellers aufweist und von einem Gehäuse umgeben ist, das eine Oberseite definiert und die Heiz- und Kühleinrichtung auf der Oberseite des Gehäuses vorgesehen ist, wobei die Heiz- und Kühleinrichtung eine Aufnahme für die Behandlungsbehälter ausgeformt hat.

In dem US Patent 4,688,517 ist eine Vorrichtung zum Behandeln von Gewebeproben offenbart. Auf einem drehbaren Tisch ist eine Vielzahl von Behandlungsbehältern für die Probenvorbereitung vorgesehen. Der Tisch ist drehbar, so daß die Behandlungsbehälter zu einer Behandlungsstation verbracht werden können, an der die Gewebeproben nacheinander in verschieden Behandlungsflüssigkeiten eingetaucht werden. Zur geeigneten Temperierung der jeweils verwendeten Behandlungsflüssigkeiten ist eine Heiz- und Kuhleinrichtung vorgesehen, die fest mit dem Gehäuse der Vorrichtung verbunden ist. Da die Heiz- und Kühleinrichtung in den Bereich des Tisches hineinragt, ist es sehr umständlich und erfordert mehrere Handgriffe, um den drehbaren Tisch auszutauschen.

Eine Aufgabe der Erfindung ist es, eine Heiz- und Kühleinrichtung für einer eine Vorrichtung zur Gewebepräparation für die Gewebeeinbettung anzugeben, die eine einfache und variable Nutzung der Vorrichtung ermöglicht.

Die objektive Aufgabe wird durch eine Vorrichtung gelöst, die dadurch gekennzeichnet, dass die Heiz- und Kühleinrichtung schwenkbar zum Gehäuses ausgestaltet ist.

Die Schwenkbarkeit der Heiz- und Kühleinrichtung wird in einem Ausführungsbeispiel dadurch erreicht, dass die Heiz- und Kühleinrichtung um eine Achse parallel zu Oberseite des Gehäuses schwenkbar ausgestaltet ist. Ferner kann die Heiz- und Kühleinrichtung ebenfalls um eine Achse senkrecht zu Oberseite des Gehäuses schwenkbar ausgestaltet sein.

Ein weiterer Vorteil der Erfindung ist es, eine Heiz- und Kühleinrichtung anzugeben, die leicht auswechselbar ist, so dass für den Benutzer auf einfache Weise zwischen Benhandlungsbehältern unterschiedlicher Größe gewechselt werden kann. Dies ist dann von Vorteil, wenn große Gewebestücke für die Gewebeeinbettung präpariert werden müssen. Hinzu kommt, dass die ebenso ausgebildete Schwenkbarkeit der Heiz und Kühleinrichtung das Auswechseln des Transporttellers erheblich erleichtert. Die Heiz- und Kühleinrichtung wird somit gerade aus der Aussparung im Gehäuse gehoben werden. Es ist nicht erforderlich, dass einzelne Behandlungsbehälter vom Transportteller abgenommen werden müssen, um das Auswechseln zu ermöglichen. Das Auswechseln der Heiz- und Kühleinrichtung kann besonders einfach durchgeführt werden. Hierzu sind die Stifte aus den Scharnieren zu entfernen und anschließend kann die gesamte Heiz- und Kühleinrichtung abgenommen werden. Eine Kodierung wird an die Steuer- und Regeleinheit im Gehäuse übermittelt, die dann entsprechend die Dreh- und Hubbewegungen des Transporttellers steuert. Bei den unterschiedlichen Heiz- und Kühleinrichtungen sind die Aufnahmen für die Behandlungsbehälter unterschiedlich groß ausgestaltet und jeweils fest mit einer Stromversorgung für die Heiz- und Kühleinrichtung verbunden. In einer Ausführungsform ist die Aufnahme für die Behandlungsbehälter derart ausgestaltet, dass eine erste und einer zweite Kammer für Behandlungsbehälter vorgesehen sind, wobei die zweite Kammer mit einer Abdeckung versehen ist. Die erste Kammer dient zum temperieren der Behandlungsflüssigkeit im Behandlungsbehälter und zum Eintauchen der Gewebeprobe in den Behandlungsbehälter. Die zweite Kammer kann zum Vorheizen der Behandlungsflüssigkeit im Behandlungsbehälter verwendet werden. Die Abdeckung verhindert ein unnötiges Verdampfen der Behandlungsflüssigkeit.

In der Zeichnung ist der Erfindungsgegenstand schematisch dargestellt und wird anhand der Figuren nachfolgend beschrieben. Dabei zeigen:
Fig. 1 eine perspektivische Ansicht der Vorrichtung zur Gewebepräparation für die Gewebeeinbettung;
Fig. 2 eine Draufsicht einer ersten Ausführungsform der Heiz - und Kühleinrichtung; und
Fig. 3 eine Draufsicht einer zweiten Ausführungsform der Heiz - und Kühleinrichtung.

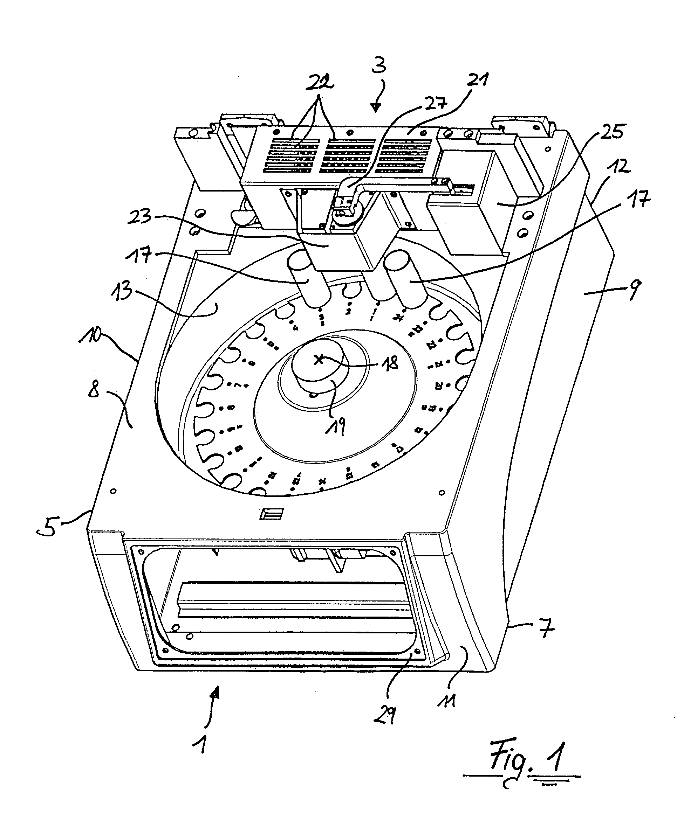

Die Vorrichtung zur Gewebepräparation für die Gewebeeinbettung zusammen mit einer Heiz- und Kühleinrichtung 3 ist in Fig. 1 perspektivisch dargestellt. Die Vorrichtung 1 zur Gewebepräparation für die Gewebeeinbettung besteht aus einem Gehäuse 5, das im wesentlichen die mechanischen und elektronischen Teile (nicht dargestellt) der Vorrichtung umschließt. Das Gehäuse 5 besteht aus einer Unterseite 7, einer Oberseite 8, aus einer rechten und einer linken Seitenwand 9 und 10 und einer Vorder- und Rückseite 11 und 12. In der Oberseite 7 des Gehäuses 5 ist eine Aussparung 13 vorgesehen, durch die der Zugang ins Innere der Vorrichtung 1 ermöglicht ist. Durch die Aussparung 13 ist der Zugriff auf einen Transportteller 15, der im Innern des Gehäuses 5 angeordnet ist möglich. Der Transportteller 15 ist in dieser Ausführungsform rund ausgestaltet und besitzt an seinem Rand eine Vielzahl von Aussparungen 16, die zur Aufnahme von Behandlungsbehältern 17 dienen. Der Transportteller 15 ist um eine Achse 18 frei drehbar und kann zusätzlich in axialer Richtung der Achse 18 angehoben und abgesenkt werden. Der Transportteller 15 ist mittels eines Sicherungselements 19 gesichert.

Die Heiz- und Kühleinrichtung 3 besteht aus einer Stromversorgung 21, die mit mehreren Lüftungsschlitzen 22 versehen ist, um die erzeugte Wärme abzutransportieren. Mit der Stromversorgung 21 ist eine Aufnahme 23 für die Behandlungsbehälter 17 verbunden, die derart angeordnet ist, dass sie zumindest teilweise in den Bereich der Aussparung 13 hineinragt. Wie bereits oben erwähnt kann der Transportteller 15 in Richtung der Achse 18 angehoben und abgesenkt werden. Im angehobenen Zustand befindet sich zumindest ein Behandlungsbehälter 17 in der Aufnahme 23 und kann in entsprechender Weise temperiert werden. In den Behandlungsbehältern befinden sich unterschiedliche Flüssigkeiten, die zur Präparation der Gewebeproben notwendig sind. Neben der Heiz- und Kühleinrichtung 3 ist eine Mechanik 25 vorgesehen mit der ein Arm 27 verbunden ist. An dem Arm 27 ist eine Gewebeprobe (nicht dargestellt) angebracht, die einem entsprechenden Präparationsprogramm unterzogen wird. Der Arm 27 kann sich auf und ab bewegen, wodurch die Gewebeprobe in die Flüssigkeit getaucht wird, die sich im dem Behandlungsbehälter 17 befindet, der sich gerade in der Aufnahme 23 befindet.

Die Vorderseite 11 des Gehäuses 5 besitzt eine in etwa rechtwinklige Freisparung 29, in die ein Bedienelement (nicht dargestellt) für den Benutzer einsetzbar ist. Hierüber können dann vom Benutzer verschiedene Behandlungsprogramme abgerufen bzw. erstellt werden.

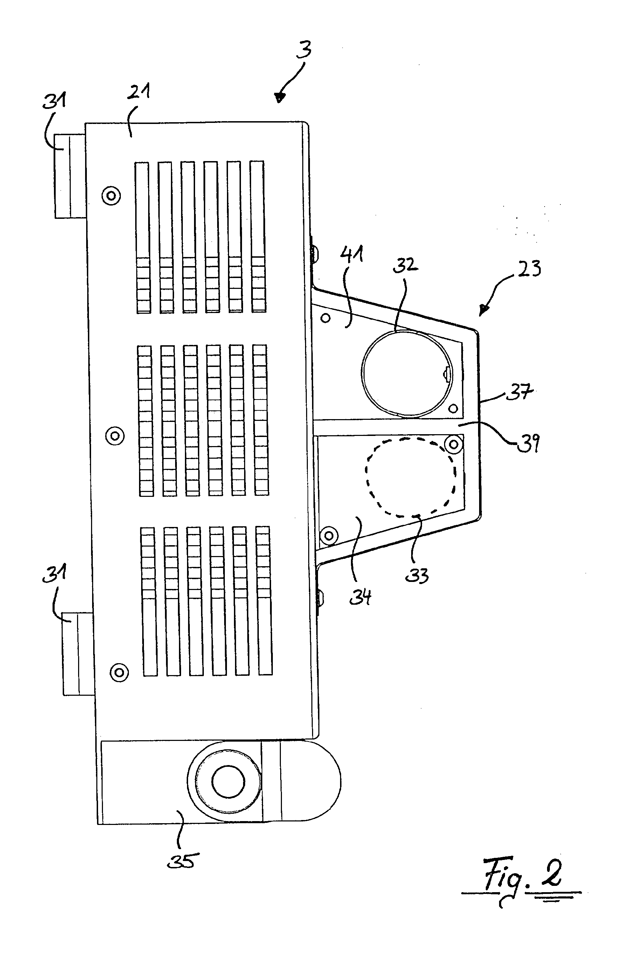

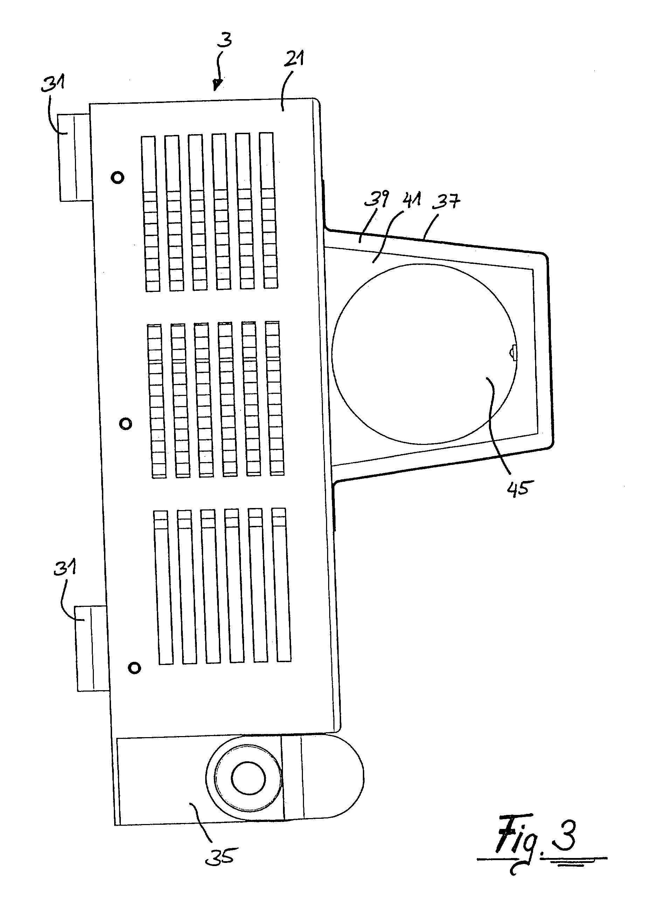

Fig. 2 zeigt eine erste Ausführungsform der Heiz- und Kühleinrichtung 3. Die Heiz- und Kühleinrichtung 3 besteht aus der Stromversorgung 21 und der Aufnahme 23 für die Behandlungsbehälter 17. An der Aufnahme 23 für die Behandlungsbehälter 17 gegenüberliegenden Seite der Stromversorgung 21, ist mindesten ein Scharnier 31 vorgesehen. In dem hier dargestellten Ausführungsbeispiel sind zwei Scharniere 31 gezeigt. Mittels der Scharniere 31 kann die gesamte Heiz- und Kühleinrichtung 3 von der Oberseite 8 des Gehäuses 5 weggeschwenkt werden. Somit wird der Raum über der Aussparung 13 frei und der Transportteller 15 kann auf einfache Weise aus dem Gehäuse 5 entnommen werden. Hinzu kommt, dass die Scharniere 31 auf einfache Weise gelöst werden können, um somit die Heiz- und Kühleinrichtung 3 gegen eine andere Ausführungsform der Heiz- und Kühleinrichtung 3 (siehe Fig. 3) schnell auszutauschen. Die Aufnahme 23 für die Behandlungsbehälter ist an der den Scharnieren 31 gegenüberliegenden Seite der Stromversorgung 21 angebracht. In dem in Fig. 2 dargestellten Ausführungsbeispiel ist die Aufnahme 23 in eine erste und eine zweite Kammer 32 und 33 unterteilt. Die erste Kammer 32 ist zylinderförmig und sowohl oben als auch unten offen ausgestaltet. Von untern kann der Behandlungsbehälter 17 eingeführt werden und von oben kann der Arm mit der Gewebeprobe in die Behandlungsflüssigkeit eintauchen. Die zweite Kammer 33 (nicht zu sehen) ist zylinderförmig und oben mit einer Platte 34 verschlossen. Die zweite Kammer 33 dient zum Vorheizen bzw. Vorkühlen der Behandlungsflüssigkeiten in jeweils einem Behandlungsbehälter 17. Die Platte 34 verhindert somit ein Verdampfen der Behandlungsflüssigkeiten.

Ebenso ist an der Stromversorgung 21 eine Lasche 35 befestigt, die in der Arbeitsposition die Heiz- und Kühleinrichtung 3 mit dem Gehäuse 5 verbindet. Dazu ist am Gehäuse eine Verriegelung (nicht dargestellt) vorgesehen, die somit die sichere Positionierung der Heiz- und Kühleinrichtung 3 zum Gehäuse 5 herstellt. Diese einfach herzustellende Verbindung ist zum einen wichtig, um die Heiz- und Kühleinrichtung 3 schnell auswechseln zu können und zum anderen eine feste und unveränderbare Stellung der Heiz- und Kühleinrichtung 3 zum Gehäuse 5 zu erreichen. Die unveränderbare und feste Stellung ist erforderlich, um sicher zu stellen, dass die Behandlungsbehälter 17 ohne zu Verkannten in die erste und zweite Kammer 32 und 33 eingeführt werden können.

Die Aufnahme 23 besteht aus einer Abdeckung 37, die für den Benutzer einen Schutz gegen mögliche Verbrennungen darstellt. Ferner ist die Abdeckung 37 mit einer Isolierschicht 39 versehen, die ebenso die erste Kammer 32 von der zweiten Kammer trennt. In einem Block 41 auch gut wärmeleitenden Material sind die erste und die zweite Kammer 32 und 33 ausgebildet.

Fig. 3 zeigt eine weitere Ausführungsform der Erfindung, dabei werden für die mit der Fig. 2 identischen Bauteile der Einfachheit halber die gleichen Bezugszeichen verwendet. Der Unterschied zu dem in Fig. 2 gezeigten Ausführungsbeispiel ist, dass die Aufnahme 23 nur eine Kammer 45 aufweist. Die Kammer 45 besitzt einen größeren Durchmesser als die erste und zweite Kammer 32 und 33 des Ausführungsbeispiels aus Fig. 2. Auf dem Transportteller könne Benadlungsbehälter aufgesetzt werden, die sich im Durchmesser unterscheiden. Es ist eine Kodierung (nicht dargestellt) vorgesehen, die der Steuer- und Regeleinheit im Gehäuse 5 mitteilt, wie der Transportteller in Abhängigkeit von der verwendeten Heiz- und Kühleinrichtung 3 zu steuern ist. Die Kodierung kann z.B. über die Kontakte des elektrischen Steckers, andere elektrischer Verbindungen, einen Barcodes oder eine andere Kodierung erfolgen. Wie bereits in Fig. 2 erwähnt kann die Heiz- und Kühleinrichtung ausgetauscht werden. Um die schnell und einfach zu erreichen, sind Stifte (nicht dargestellt) in den Scharnieren 31 vorgesehen. Nach dem Entnehmen der Stifte kann die Heiz- und Kühleinrichtung 3 entnommen und gegen eine andere ausgetauscht werden.

Die Erfindung wurde in bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

Bezugszeichenliste:
- 1: Vorrichtung
- 3: Heiz- und Kühleinrichtung
- 5: Gehäuse
- 7: Unterseite
- 8: Oberseite
- 9: rechte Seitenwand
- 10: linke Seitenwand
- 11: Vorderseite
- 12: Rückseite
- 13: Aussparung
- 15: Transportteller
- 16: Aussparung
- 17: Behandlungsbehältern
- 18: Achse
- 19: Sicherungselement
- 21: Stromversorgung
- 22: Lüftungsschlitze
- 23: Aufnahme
- 25: Mechanik
- 27: Arm
- 29: Freisparung
- 31: Scharnier
- 32: erste Kammer

- 33: zweite Kammer
- 34: Platte
- 35: Lasche
- 37: Abdeckung
- 39: Isolierschicht
- 41: Block
- 45: Kammer

## Patentansprüche

1. Heiz- und Kühleinrichtung (3) für eine Vorrichtung (1) zur Gewebepräparation für die Gewebeeinbettung, wobei die Vorrichtung (1) eine Aussparung (13) zur Aufnahme eines Transporttellers (15) aufweist und von einem Gehäuse (5) umgeben ist, das eine Oberseite (8) definiert und die Heiz - und Kühleinrichtung (3) auf der Oberseite (8) des Gehäuses (5) vorgesehen ist, wobei die Heiz- und Kühleinrichtung (3) eine Aufnahme (23) mit mindestens einer Kammer (32) für die Aufnahme mindestens eines Behandlungsbehälters (17) ausgeformt hat, **dadurch gekennzeichnet, dass** die Heiz- und Kühleinrichtung (3) schwenkbar zum Gehäuse (5) ausgestaltet ist.

2. Heiz- und Kühleinrichtung nach Anspruch 1, **dadurch gekennzeichnet, dass** die Heiz- und Kühleinrichtung (3) um eine Achse parallel zu Oberseite (8) des Gehäuses (5) schwenkbar ausgestaltet ist.

3. Heiz- und Kühleinrichtung nach Anspruch 1, **dadurch gekennzeichnet, dass** die Heiz- und Kühleinrichtung (3) um eine Achse senkrecht zu Oberseite (8) des Gehäuses (5) schwenkbar ausgestaltet ist.

4. Heiz- und Kühleinrichtung (3) nach Anspruch 2, **dadurch gekennzeichnet, dass** mindestens ein Scharnier (31) an der Heiz- und Kühleinrichtung (3) an der Seite vorgesehen ist, die der Aufnahme (23) für die Behandlungsbehälter (17) abgewandt ist.

5. Heiz- und Kühleinrichtung nach Anspruch 1, **dadurch gekennzeichnet, dass** an der Heiz- und Kühleinrichtung (3) eine Lasche (35) ausgeformt ist, die mit einer Verriegelung an der Oberseite (8) des Gehäuses (5) zusammenwirkt.

6. Heiz- und Kühleinrichtung nach Anspruch 4, **dadurch gekennzeichnet, dass** das mindestens eine Scharnier (32) lösbar ausgestaltet ist.

7. Heiz- und Kühleinrichtung nach Anspruch 1, **dadurch gekennzeichnet, dass** die Aufnahmen (23) mit Kammern unterschiedlicher Größe für die Behandlungsbehälter (17) ausgestaltet sind und jeweils fest mit einer Stromversorgung für die Heiz- und Kühleinrichtung (3) verbunden sind.

8. Heiz- und Kühleinrichtung (3) nach Anspruch 7, **dadurch gekennzeichnet, dass** die mindestens eine Kammer (32, 33) für die Behandlungsbehälter (17) in einem gut wärmeleitenden Material ausgebildet sind.

9. Heiz- und Kühleinrichtung (3) nach Anspruch 8, **dadurch gekennzeichnet, dass** das gut wärmeleitende Material mit einer Abschirmung umgeben ist, und dass an der Innenseite der Abschirmung eine Isolierschicht (39) vorgesehen ist.

10. Heiz- und Kühleinrichtung (3) nach Anspruch 1, **dadurch gekennzeichnet, dass** die Aufnahme (23) für die Behandlungsbehälter (17), derart ausgestaltet ist, dass eine erste und einer zweite Kammer (32, 33) für Behandlungsbehälter (17) vorgesehen ist, wobei eine Kammer (32, 33) mit einer Abdeckung (37) versehen ist.
